# DEMANDE DE BREVET EUROPEEN

(11) **EP 4 683 164 A1**
(43) Date de publication de la demande: **21.01.2026**
(21) Numéro de dépôt: 25188977.0
(22) Date de dépôt: 11.07.2025
(51) Int. Cl.: H02J 7/00, H02J 7/34, H02J 50/30

(54) **SYSTEME D'ALIMENTATION PAR FIBRE OPTIQUE**

(30) Priorité: 16.07.2024 FR 2407783
(71) Demandeur: Commissariat à l'Energie Atomique et aux Energies Alternatives, 75015 Paris (FR)
(72) Inventeur: PRAT, Christophe, 38054 Grenoble Cedex 09 (FR); CABANILLAS, Esteban, 38054 Grenoble Cedex 09 (FR)
(74) Mandataire: Cabinet Beaumont

(57) **Abrégé**

La présente description concerne un système (100) comprenant des premier (101) et deuxième (103) dispositifs électroniques reliés par une fibre optique (105), dans lequel :
- le premier dispositif comporte une source laser (107) destinée à illuminer la fibre optique ;
- le deuxième dispositif comporte un convertisseur photoélectrique (111) destiné à être illuminé depuis la fibre optique et un élément capacitif (115) de stockage d'énergie électrique produite par le convertisseur photoélectrique ; et
- les premier et deuxième dispositifs électroniques comportent un circuit de commande connecté à l'élément capacitif et configuré pour :
a) acquérir une première courbe de charge de l'élément capacitif ;
b) comparer la première courbe de charge à une deuxième courbe de charge de référence ; et
c) en cas d'écart entre les première et deuxième courbes de charge, adapter une puissance optique de la source laser.

## Description

### Domaine technique

La présente description concerne de façon générale les dispositifs électroniques, plus particulièrement les systèmes d'alimentation par fibre optique.

### Technique antérieure

Des systèmes d'alimentation par fibre optique ont été proposés. Ces systèmes comprennent typiquement des premier et deuxième dispositifs électroniques reliés entre eux par une fibre optique. Le premier dispositif comporte généralement une source de rayonnements lumineux, par exemple une source laser de puissance, destinée à injecter dans la fibre optique un signal optique d'alimentation du deuxième dispositif. Par ailleurs, le deuxième dispositif comporte généralement un convertisseur photoélectrique, par exemple une photodiode, destiné à convertir en énergie électrique le signal optique d'alimentation émis par le premier dispositif et transmis par la fibre optique. L'énergie électrique produite par le convertisseur photoélectrique est par exemple stockée dans un élément capacitif, par exemple un condensateur, du deuxième dispositif. Le deuxième dispositif peut en outre utiliser la fibre optique pour envoyer des données au premier dispositif. Dans ce cas, le deuxième dispositif comporte par exemple une source laser permettant d'émettre, vers le premier dispositif, un signal optique de données transmis par la fibre optique.

Le brevet américain US 7965948 décrit un exemple d'un tel système d'alimentation par fibre optique.

Toutefois, les systèmes existants d'alimentation par fibre optique présentent divers inconvénients. En particulier, des phénomènes optiques se produisant dans la fibre optique et/ou des phénomènes électro-optiques se produisant dans le convertisseur photoélectrique peuvent provoquer une baisse de rendement, voire une dégradation ou une destruction partielle ou totale, du système d'alimentation par fibre optique.

Afin de pallier ce problème, la demande de brevet américain US 2002/0131757 propose de moduler la puissance de la source laser du premier dispositif en fonction d'un niveau d'un signal optique prélevé sur la fibre optique reliant les premier et deuxième dispositifs, la fibre optique présentant alors une structure spécifiquement adaptée à la mise en œuvre d'un tel prélèvement. Le signal optique ainsi prélevé sur la fibre optique prévue à cet effet est plus particulièrement traité par un circuit de commande permettant, au moyen de filtres continûment ajustables, de modifier la puissance du rayonnement laser injecté dans la fibre optique.

D'autres systèmes d'alimentation par fibre optique existants utilisent des filtres rotatifs ou thermo-optiques afin de moduler la puissance optique de la source laser. Toutefois, les filtres rotatifs ne permettent de modifier la puissance optique que de manière discrète, c'est-à-dire non continue, tandis que les filtres thermo-optiques souffrent de problèmes de lenteur dans leur fonctionnement.

Par ailleurs, une autre approche consiste à prévoir plusieurs fibres optiques pour relier les premier et deuxième dispositifs d'un système d'alimentation par fibre optique, le deuxième dispositif comprenant alors plusieurs convertisseurs photoélectriques respectivement illuminés par les fibres optiques. Cela présente l'avantage de répartir, sur plusieurs fibres optiques et plusieurs convertisseurs photoélectriques, la puissance optique émise par la source laser du premier dispositif. Toutefois, cela entraîne une hausse de complexité et de coût du système.

### Résumé de l'invention

Il existe un besoin de pallier tout ou partie des inconvénients des systèmes d'alimentation par fibre optique existants. Il serait en particulier souhaitable de pouvoir moduler la puissance optique de la source laser d'alimentation du premier dispositif sans complexifier le système, notamment sans recourir à des prélèvements optiques ou à l'utilisation de filtres.

Pour cela, un mode de réalisation prévoit un système comprenant des premier et deuxième dispositifs électroniques reliés par une fibre optique, dans lequel :
- le premier dispositif électronique comporte une source laser destinée à illuminer une première extrémité de la fibre optique ;
- le deuxième dispositif électronique comporte un convertisseur photoélectrique destiné à être illuminé depuis une deuxième extrémité de la fibre optique opposée à la première extrémité et un élément capacitif de stockage d'énergie électrique produite par le convertisseur photoélectrique ; et
- les premier et deuxième dispositifs électroniques comportent un circuit de commande connecté à l'élément capacitif et configuré pour mettre en œuvre les étapes successives suivantes :
   a) acquérir une première courbe de charge de l'élément capacitif ;
   b) comparer la première courbe de charge à une deuxième courbe de charge de référence ; et
   c) en cas d'écart entre les première et deuxième courbes de charge, adapter une puissance optique de la source laser.

Selon un mode de réalisation, l'étape b) est mise en œuvre par une première puce de commande du premier dispositif électronique.

Selon un mode de réalisation, l'étape b) est mise en œuvre par une deuxième puce de commande du deuxième dispositif électronique.

Selon un mode de réalisation, le deuxième dispositif électronique comporte en outre un composant résistif variable associé en parallèle du convertisseur photoélectrique, le système de commande étant en outre configuré pour mettre en œuvre les étapes successives suivantes :
d) déterminer une première valeur de résistance du composant résistif variable pour laquelle le convertisseur photoélectrique présente un rendement de conversion optimal ;
e) comparer la première valeur de résistance à une deuxième valeur de résistance de référence ; et
f) en cas d'écart entre les première et deuxième valeurs de résistance, adapter la puissance optique de la source laser.

Selon un mode de réalisation, l'étape e) est mise en œuvre par la première puce de commande.

Selon un mode de réalisation, l'étape e) est mise en œuvre par la deuxième puce de commande.

Selon un mode de réalisation, le rendement de conversion est estimé par une mesure d'un photocourant fourni par le convertisseur photoélectrique.

Selon un mode de réalisation, l'adaptation de la puissance de la source laser est une diminution de la puissance de la source laser.

Selon un mode de réalisation, l'élément capacitif est un condensateur comprenant deux armatures conductrices séparées par une région isolante.

Selon un mode de réalisation, les premier et deuxième dispositifs sont reliés uniquement par la fibre optique.

Un mode de réalisation prévoit un procédé de commande d'un système comprenant des premier et deuxième dispositifs électroniques reliés par une fibre optique, dans lequel :
- le premier dispositif électronique comporte une source laser destinée à illuminer une première extrémité de la fibre optique ;
- le deuxième dispositif électronique comporte un convertisseur photoélectrique destiné à être illuminé depuis une deuxième extrémité de la fibre optique opposée à la première extrémité et un élément capacitif de stockage d'énergie électrique produite par le convertisseur photoélectrique ; et
- les premier et deuxième dispositifs électroniques comportent un circuit de commande connecté à l'élément capacitif,
le procédé comprenant les étapes successives suivantes, mises en œuvre par le circuit de commande :
a) acquérir une première courbe de charge de l'élément capacitif ;
b) comparer la première courbe de charge à une deuxième courbe de charge de référence ; et
c) en cas d'écart entre les première et deuxième courbes de charge, adapter une puissance optique de la source laser.

Selon un mode de réalisation, le procédé comprend en outre les étapes successives suivantes, mises en œuvre par le circuit de commande :
d) déterminer une première valeur de résistance d'un composant résistif variable du deuxième dispositif électronique, associé en parallèle du convertisseur photoélectrique, pour laquelle le convertisseur photoélectrique présente un rendement de conversion optimal ;
e) comparer la première valeur de résistance à une deuxième valeur de résistance de référence ; et
f) en cas d'écart entre les première et deuxième valeurs de résistance, adapter la puissance optique de la source laser.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre de façon schématique et partielle, sous forme de blocs, un exemple de système d'alimentation par fibre optique selon un mode de réalisation ;
la figure 2 est un graphique illustrant des exemples simplifiés de courbes de charge d'un élément capacitif du système d'alimentation par fibre optique de la figure 1 ;
la figure 3 est un graphique illustrant un exemple de courbe de variation d'un rendement de conversion d'un convertisseur photoélectrique du système d'alimentation par fibre optique de la figure 1 ; et
la figure 4 est un graphique illustrant un exemple de courbe de variation d'une résistance d'un élément résistif associé en parallèle du convertisseur photoélectrique du système d'alimentation par fibre optique de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les diverses applications des systèmes d'alimentation par fibre optique n'ont pas été détaillées, les modes de réalisation décrits étant compatibles avec toutes ou la plupart des applications usuelles susceptibles de mettre en œuvre un ou plusieurs systèmes d'alimentation par fibre optique moyennant éventuellement des adaptations à la portée de la personne du métier à la lecture de la présente description.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % ou à 10° près, de préférence à 5 % ou à 5° près.

Dans la description qui suit, les qualificatifs « isolant » et « conducteur » signifient respectivement, sauf précision contraire, électriquement isolant et électriquement conducteur.

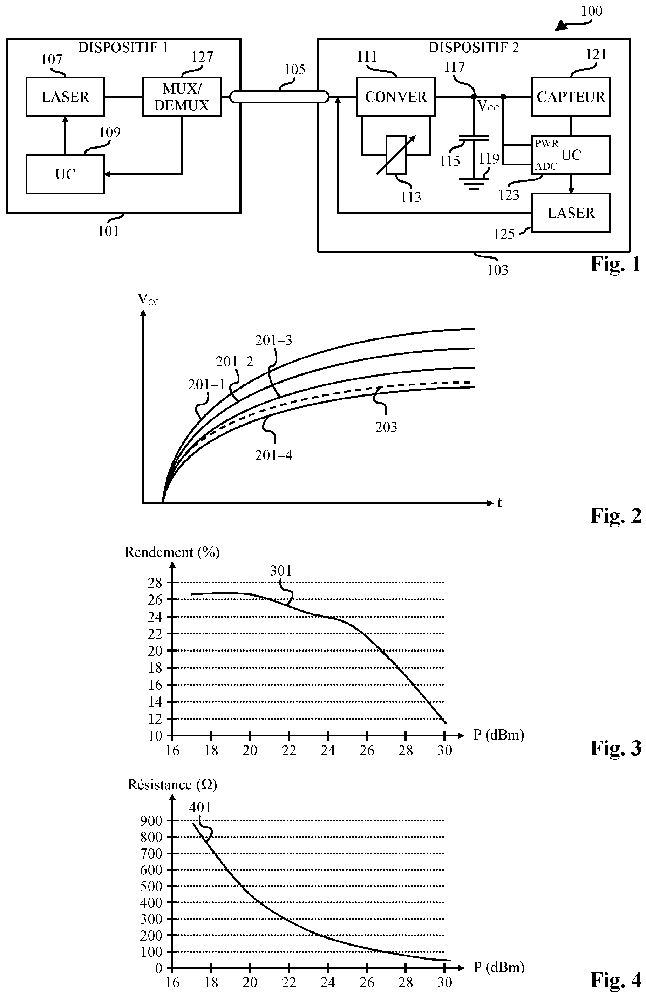

La figure 1 illustre de façon schématique et partielle, sous forme de blocs, un exemple de système 100 d'alimentation par fibre optique selon un mode de réalisation.

Dans l'exemple représenté, le système 100 comprend un premier dispositif électronique 101 (DISPOSITIF 1) relié à un deuxième dispositif électronique 103 (DISPOSITIF 2) par une fibre optique 105. Le dispositif 101 est destiné à fournir un signal optique d'alimentation du dispositif 103 et la fibre optique 105 permet de transmettre le signal optique depuis le dispositif 101 jusqu'au dispositif 103.

Les dispositifs 101 et 103 ne sont, dans l'exemple illustré, reliés par aucune liaison autre que la fibre optique 105. En particulier, le système 100 est dépourvu de liaison électrique, par exemple une liaison câblée comprenant un ou plusieurs fils conducteurs, entre les dispositifs 101 et 103. L'utilisation d'une liaison optique plutôt que d'une liaison électrique pour alimenter le dispositif 103 par le dispositif 101 permet par exemple d'espacer les dispositifs 101 et 103 de plusieurs centaines de mètres voire de plusieurs kilomètres. Dans ce cas, l'alimentation du dispositif 103 par une liaison électrique entraînerait des pertes énergétiques, notamment une chute de tension, bien supérieures à celles causées par la fibre optique 105. Par ailleurs, l'utilisation de la fibre optique 105 pour relier les dispositifs 101 et 103 permet de s'affranchir de la présence d'une liaison transmettant un signal d'alimentation électrique susceptible de perturber, ou d'être perturbé, par l'environnement des dispositifs 101 et 103, par exemple dans des applications liées à l'aéronautique, à l'automobile, etc.

Dans l'exemple illustré, le dispositif 101 comprend une source laser 107 (LASER) destinée à produire le signal optique d'alimentation du dispositif 103. La source laser 107 est plus particulièrement destinée à illuminer une première extrémité de la fibre optique 105, en l'espèce l'extrémité par laquelle la fibre optique 105 est connectée au dispositif 101. La source laser 107 produit par exemple des rayonnements lumineux correspondant au signal optique d'alimentation du dispositif 103.

Dans l'exemple représenté, le dispositif 101 comprend en outre une puce de commande 109 (UC) connectée à la source laser 107. La puce de commande 109 est par exemple destinée à commander la source laser 107. À titre d'exemple, la puce de commande 109 permet notamment d'activer ou d'interrompre l'émission du signal optique d'alimentation du dispositif 103 par la source laser 107, par exemple en fonction d'un état d'un signal de commande émis par la puce de commande 109 et reçu par la source laser 107. À titre d'exemple, la puce de commande 109 est un microcontrôleur ou un microprocesseur.

Dans l'exemple illustré, le dispositif 103 comprend un convertisseur photoélectrique 111 (CONVER), par exemple un convertisseur photovoltaïque, destiné à recevoir le signal optique d'alimentation produit par le dispositif 101. Le convertisseur photoélectrique 111 est plus particulièrement destiné à être illuminé depuis une deuxième extrémité de la fibre optique 105 opposée à sa première extrémité, en l'espèce l'extrémité par laquelle la fibre optique 105 est connectée au dispositif 103. Le convertisseur photoélectrique 111 permet par exemple de convertir le signal optique produit par la source laser 107 en un signal électrique d'alimentation d'un ou plusieurs composants et/ou circuits du dispositif 103. À titre d'exemple, le convertisseur photoélectrique 111 est une diode photosensible, aussi appelée photodiode.

Dans l'exemple illustré, le dispositif 103 comprend en outre un composant résistif 113, par exemple une résistance, associé en parallèle du convertisseur photoélectrique 111. Le composant résistif 113 présente par exemple une résistance variable permettant d'ajuster une impédance électrique du convertisseur photoélectrique 111. Cet exemple n'est toutefois pas limitatif et le dispositif 103 peut, à titre de variante, être dépourvu du composant résistif 113.

Dans l'exemple représenté, le dispositif 103 comprend en outre un élément capacitif 115 de stockage d'une énergie électrique produite par le convertisseur photoélectrique 111 lorsque ce dernier est illuminé depuis la source laser 107 du dispositif 101. À titre d'exemple, l'élément capacitif 115 est un condensateur, l'élément capacitif 115 comprenant alors deux armatures conductrices séparées par une région isolante. Dans l'exemple illustré, l'élément capacitif 115 comporte une borne, ou une électrode, connectée à un nœud 117 du dispositif 103 et une autre borne, ou une autre électrode, connectée à un nœud 119 d'application d'un potentiel de référence, par exemple la masse. Les bornes ou électrodes du composant capacitif 115 sont par exemple connectées respectivement à ses armatures conductrices. Dans l'exemple représenté, le nœud 117 est connecté à une borne de sortie du convertisseur photoélectrique 111. Lorsque la source laser 107 est en fonctionnement, le signal optique d'alimentation du dispositif 103 transmis par la fibre optique 105 illumine le convertisseur photoélectrique 111, provoquant ainsi une accumulation, aux bornes de l'élément capacitif 115, de charges photogénérées par le convertisseur photoélectrique 111.

Dans l'exemple illustré, le dispositif 103 comprend en outre un capteur 121 (CAPTEUR) connecté au nœud 117. Le capteur 121 est par exemple destiné à produire au moins un signal de mesure, par exemple un signal électrique en tension ou en courant, représentatif d'au moins une grandeur physique, par exemple choisie parmi : une température, une pression, un débit, une distance, un poids, etc. Le capteur 121 est par exemple alimenté électriquement par l'élément capacitif 115 et/ou directement par le convertisseur photoélectrique 111.

Dans l'exemple représenté, le dispositif 103 comprend en outre une puce de commande 123 (UC), aussi appelée puce de traitement, connectée au capteur 121. La puce de commande 123 est par exemple destinée à recevoir et à traiter le signal de mesure produit par le capteur 121. La puce de commande 123 est par exemple en outre connectée au nœud 117. De façon analogue au capteur 121, la puce de commande 123 est par exemple alimentée électriquement par l'élément capacitif 115 et/ou directement par le convertisseur photoélectrique 111. Dans l'exemple illustré en figure 1, la puce de commande 123 comprend deux bornes connectées au nœud 117, en l'espèce une borne d'alimentation PWR destinée à recevoir un potentiel V_{CC} présent au nœud 117 et une borne de numérisation ADC reliée ou connectée à un convertisseur analogique/numérique (non détaillé en figure 1) de la puce de commande 123. Le convertisseur analogique/numérique est par exemple adapté à acquérir et à stocker, par exemple dans une mémoire de la puce de commande 123, des données représentatives de variations du potentiel V_{CC} présent au nœud 117, donc d'une tension présente aux bornes de l'élément capacitif 115. À titre d'exemple, la puce de commande 123 du dispositif 103 est un microcontrôleur ou un microprocesseur.

Dans l'exemple illustré, le dispositif 103 comprend en outre une source laser 125 (LASER) connectée à la puce de commande 123. La source laser 125 est par exemple destinée à émettre un signal optique de données transmis, par la fibre optique 105, au dispositif 101. Dans cet exemple, la source laser 125 est plus particulièrement destinée à illuminer la deuxième extrémité de la fibre optique 105, c'est-à-dire l'extrémité de la fibre optique 105 opposée à celle qui est illuminée par la source laser 107 du dispositif 101. La source laser 125 est par exemple analogue à la source laser 107, mais diffère de la source 107 notamment en ce qu'elle présente une plage de longueurs d'ondes d'émission différente et une puissance optique, ou un flux lumineux, moindre. À la différence du signal optique d'alimentation produit par la source laser 107, le signal optique de données produit par la source laser 125 n'est pas destiné à permettre l'alimentation de composants ou de circuits électroniques après conversion photoélectrique.

Dans l'exemple représenté, le dispositif 101 comprend en outre un multiplexeur/démultiplexeur 127 (MUX/DEMUX). Le multiplexeur/démultiplexeur 127 permet par exemple de séparer le signal optique de données émis par la source laser 125 et le signal optique d'alimentation émis par la source laser 107. Dans l'exemple représenté, le multiplexeur/démultiplexeur 127 est interposé entre la source laser 107 et la fibre optique 105 et relie optiquement la source laser 107 à la première extrémité de la fibre optique 105. Dans cet exemple, le multiplexeur/démultiplexeur 127 est connecté, par une liaison optique, à la puce de commande 109. La liaison optique permet par exemple de transmettre le signal de données provenant du dispositif 103 à la puce de commande 109 du dispositif 101.

À titre d'exemple, les puces de commande 109 et 123 et la source laser 125 font partie d'un circuit de commande des dispositifs 101 et 103 connecté à l'élément capacitif 115.

En fonctionnement, la source laser 107 est par exemple activée afin d'émettre le signal optique d'alimentation du dispositif 103. Ce signal optique est alors transmis par la fibre optique 105 depuis le dispositif 101 jusqu'au dispositif 103 et est converti, par le convertisseur photoélectrique 111, en un signal électrique d'alimentation du dispositif 103. Cela tend à charger l'élément capacitif 115, donc à faire augmenter le potentiel V_{CC} présent au nœud 117. L'énergie électrique produite par le convertisseur photoélectrique 111 et/ou l'énergie électrique stockée par l'élément capacitif 115 est par exemple consommée, au moins partiellement, par le capteur 121, la puce de commande 123 et/ou la source laser 125. Une fois alimenté, le capteur 121 transmet par exemple à la puce de commande 123 le signal électrique de mesure. Ce dernier est alors converti en un signal optique de mesure émis par la source laser 125. Le signal optique de mesure est ensuite transmis par la fibre optique 105 depuis le dispositif 103 jusqu'au dispositif 101. Le signal optique de mesure est alors isolé, par le multiplexeur/démultiplexeur 127, puis transmis à la puce de commande 109. Cela permet à la puce de commande 109 du dispositif 101 d'acquérir des mesures d'une ou plusieurs grandeurs physiques au moyen du capteur 121 sans utiliser de liaison électrique pour relier le dispositif 101 au dispositif 103.

La transmission du signal optique d'alimentation et du signal optique de mesure par la fibre optique 105 s'effectue par exemple de façon simultanée. À titre de variante, l'émission du signal optique d'alimentation par la source laser 107 du dispositif 101 peut être interrompue lors de l'émission du signal optique de mesure par la source laser 125 du dispositif 103. À titre d'exemple, l'interruption de l'émission du signal optique d'alimentation par la source laser 107 est demandée par la puce de commande 123, par exemple au moyen d'un signal optique de données spécifique comprenant une commande d'interruption. La commande est alors par exemple reçue et traitée par la puce de commande 109, qui interrompt alors l'émission de rayonnement par la source laser 107 pendant une durée permettant au signal optique de mesure d'être transmis par la fibre optique 105.

La figure 2 est un graphique illustrant des exemples simplifiés de courbes de charge de l'élément capacitif 115 du dispositif 103 du système 100 d'alimentation par fibre optique de la figure 1.

Le graphique de la figure 2 illustre plus précisément des exemples de courbes 201 (201-1, 201-2, 201-3 et 201-4) d'évolution, en fonction du temps t, du potentiel V_{CC} présent au nœud 115. Les courbes 201 correspondent par exemple à des courbes de charge de l'élément capacitif 115 pour différentes puissances optiques P de la source laser 107 (quatre puissances optiques différentes, dans l'exemple illustré en figure 2). À titre d'exemple, les courbes 201 constituent des courbes de référence représentatives de cas dans lesquels le système 100 présente un fonctionnement optimal. Les courbes 201 sont par exemple établies à l'issue d'étapes d'un procédé de calibration du système 100. À titre de variante ou de complément, les courbes 201 peuvent être établies à l'aide d'outils de calcul et/ou de simulation numérique.

Les courbes 201 forment par exemple plus précisément un abaque représentatif du fonctionnement optimal du système 100. Les courbes de charge de référence 201 sont par exemple stockées dans une mémoire de la puce de commande 107 ou dans une mémoire de la puce de commande 123. À titre d'exemple, chaque courbe 201 est stockée sous forme d'un tableau de valeurs. Cet exemple n'est toutefois pas limitatif, chaque courbe 201 pouvant, à titre de variante, être stockée sous la forme d'une équation mathématique.

Selon un mode de réalisation, le circuit de commande des dispositifs 101 et 103 du système 100 est configuré pour mettre en œuvre les étapes successives suivantes :
a) acquérir une courbe de charge 203 (en pointillé) de l'élément capacitif 115 ;
b) comparer la courbe de charge 203 à l'une des courbes de charge de référence 201, par exemple la courbe de charge de référence 201-3 ; et
c) en cas d'écart entre la courbe de charge 203 et la courbe de charge de référence 201 (la courbe 201-3, dans cet exemple), adapter une puissance de la source laser 107.

L'étape a) d'acquisition de la courbe de charge 203 de l'élément capacitif 115 est par exemple mise en œuvre par la puce de commande 123. Des mesures successives du potentiel V_{CC} présent au nœud 117 sont par exemple effectuées par l'entrée reliée ou connectée au convertisseur analogique/numérique de la puce de commande 123 à différents instants, par exemple séparés d'une durée égale. Les mesures du potentiel V_{CC} sont par exemple enregistrées dans une mémoire de la puce de commande 123.

L'étape b) de comparaison de la courbe de charge 203 à la courbe de charge de référence 201 est par exemple mise en œuvre par la puce de commande 109 du dispositif 101. Dans ce cas, la courbe de charge 203 acquise par la puce de commande 123 à l'étape a) est transmise, par la source laser 125 du dispositif 103 et par la fibre optique 105, à la puce de commande 109 pour comparaison à la courbe de charge de référence 201. La puce de commande 109 étant utilisée pour commander la source laser 107, elle connaît par exemple la puissance optique émise par la source laser 107 afin de pouvoir déterminer à quelle courbe de charge de référence 201 comparer la courbe de charge 203.

À titre de variante, l'étape b) de comparaison de la courbe de charge 203 à la courbe de charge de référence 201 peut être mise en œuvre par la puce de commande 123 du dispositif 103. Dans ce cas, le dispositif 101 transmet par exemple au dispositif 103, au moyen de de la fibre optique 105, des données représentatives de la puissance optique émise par la source laser 107 afin que le dispositif 103 puisse déterminer à quelle courbe de charge de référence 201 comparer la courbe de charge 203. Une autre option peut consister à prélever, en sortie de la fibre optique 105, une partie du signal optique pour estimer la puissance optique émise par la source laser 107 et en déduire à quelle courbe de charge de référence 201 comparer la courbe de charge 203.

L'étape c) de détection d'écart entre la courbe de charge 203 acquise à l'étape a) et la courbe de charge de référence 201 est par exemple mise en œuvre par la puce de commande ayant réalisé l'étape b). La détection d'un écart entre les courbes 203 et 201 indique la présence d'un défaut ou dysfonctionnement du système 100, par exemple un échauffement du convertisseur photoélectrique 111 entraînant une baisse de rendement se traduisant par une perturbation de la charge de l'élément capacitif 115.

Dans le cas où l'étape b) a été mise en œuvre par la puce de commande 109 du dispositif 101 et si un écart a été détecté entre les courbes 203 et 201, la puce de commande 109 transmet à la source laser 107 une commande d'adaptation de puissance optique, par exemple une commande de réduction de puissance optique. Dans le cas où l'étape b) a été mise en œuvre par la puce de commande 123 du dispositif 103 et si un écart a été détecté entre les courbes 203 et 201, la commande d'adaptation de puissance optique est par exemple émise par la puce de commande 123 sous forme d'un signal optique de commande transmis par la source laser 125 et reçu par la puce de commande 109 qui module alors la puissance optique de la source laser 107. Cela permet par exemple de réduire ou de limiter l'échauffement du convertisseur photoélectrique 111, donc d'améliorer son rendement.

Les étapes a), b) et c) susmentionnées sont par exemple mises en œuvre pendant une phase d'alimentation du dispositif 103 par le dispositif 101. À titre d'exemple, chaque phase d'alimentation comprend une alternance d'au moins une phase de charge de l'élément capacitif 115 suivie d'une phase de décharge de l'élément capacitif 115. Durant la phase de charge, la source laser 107 injecte par exemple le signal optique d'alimentation du dispositif 103 dans la fibre optique 105 et la source laser 125 est maintenue à l'arrêt. Durant la phase de décharge, la source laser 107 est par exemple maintenue à l'arrêt et la source laser 125 est utilisée pour injecter le signal optique de données, comprenant par exemple le signal optique de mesure, dans la fibre optique 105. La courbe de charge 203 est par exemple acquise pendant la phase de charge, le signal optique de données transmis pendant la phase de décharge comprenant par exemple des données relatives à la courbe de charge 203, pour permettre à la puce de commande 109 de réaliser la comparaison prévue à l'étape b), ou directement une commande de réduction de la puissance optique de la source laser 107. Cela permet par exemple à la puce de commande 109 de réduire la puissance optique de la source laser 107 pour la phase de charge suivante.

La mise en œuvre des étapes a), b) et c) susmentionnées revient à utiliser l'élément capacitif 115 de stockage de l'énergie électrique produite par le convertisseur photoélectrique 111 en tant que capteur permettant de détecter une dégradation ou un dysfonctionnement du système 100. Cela présente l'avantage d'éviter la mise en œuvre de prélèvements optiques et/ou l'utilisation de filtres.

La figure 3 est un graphique illustrant un exemple de courbe 301 de variation, en fonction de la puissance optique incidente P (en décibel-milliwatts, dBm), d'un rendement de conversion (en pourcents, %) du convertisseur photoélectrique 111 du système 100 d'alimentation par fibre optique de la figure 1.

Dans l'exemple illustré, le rendement de conversion du convertisseur photoélectrique 111 décroît lorsque la puissance optique incidente P augmente.

La figure 4 est un graphique illustrant un exemple de courbe 401 de variation, en fonction de la puissance optique incidente P (en décibel-milliwatts, dBm), d'une résistance (en ohms, Ω) du composant résistif 113 associé en parallèle du convertisseur photoélectrique 111 du système 100 d'alimentation par fibre optique de la figure 1.

Dans l'exemple illustré, la résistance du composant résistif 113 décroît lorsque la puissance optique incidente P augmente.

À chaque valeur de puissance P est associée une valeur de résistance du composant résistif 113 permettant d'obtenir un rendement maximal du convertisseur photoélectrique 111.

Selon un mode de réalisation, le circuit de commande du système 100 est, à titre de variante ou de complément, configuré pour mettre en œuvre les étapes successives suivantes :
d) déterminer une valeur de résistance R du composant résistif 113 pour laquelle le convertisseur photoélectrique 111 présente un rendement optimal ;
e) comparer la valeur de résistance R à une valeur de résistance de référence R_{ref} ; et
f) en cas d'écart entre la valeur de résistance R et la valeur de résistance de référence R_{ref}, adapter la puissance de la source laser 107.

L'étape d) de détermination de la valeur de résistance R du composant résistif 113 pour laquelle le convertisseur photoélectrique 111 présente un rendement optimal est par exemple mise en œuvre par la puce de commande 123. Des mesures successives d'une grandeur physique image du rendement du convertisseur photoélectrique 111, par exemple un courant, ou photocourant, fourni par le convertisseur photoélectrique 111 lorsqu'il est illuminé depuis la deuxième extrémité de la fibre optique 105, sont par exemple effectuées par la puce de commande 123, pour différentes valeurs de résistance du composant résistif 113, afin d'estimer la valeur de résistance R pour laquelle le rendement de conversion maximal est atteint. À titre d'exemple, une plage de valeurs de résistances centrée sur la valeur de résistance de référence R_{ref} correspondant à la puissance optique considérée est balayée et le rendement de conversion est estimé pour chaque valeur de résistance. Les estimations du rendement pour chaque valeur de résistance sont par exemple enregistrées dans une mémoire de la puce de commande 123 ou dans une mémoire de la puce de commande 109.

L'étape e) de comparaison de la résistance R à la résistance de référence R_{ref} est par exemple mise en œuvre par la puce de commande 109 du dispositif 101. Dans ce cas, la résistance R déterminée par la puce de commande 123 à l'étape d) est transmise, par la source laser 125 du dispositif 103 et par la fibre optique 105, à la puce de commande 109 pour comparaison à la résistance de référence R_{ref}. La puce de commande 109 étant utilisée pour commander la source laser 107, elle connaît par exemple la puissance optique émise par la source laser 107 afin de pouvoir déterminer à quelle résistance de référence R_{ref} comparer la résistance R.

À titre de variante, l'étape e) de comparaison de la résistance R à la résistance de référence R_{ref} peut être mise en œuvre par la puce de commande 123 du dispositif 103. Dans ce cas, le dispositif 101 transmet par exemple au dispositif 103, au moyen de de la fibre optique 105, des données représentatives de la puissance optique émise par la source laser 107 afin que le dispositif 103 puisse déterminer à quelle résistance de référence R_{ref} comparer la résistance R. Une autre option peut consister à prélever, en sortie de la fibre optique 105, une partie du signal optique pour estimer la puissance optique émise par la source laser 107 et en déduire à quelle résistance de référence R_{ref} comparer la résistance R.

L'étape f) de détection d'écart entre la résistance R déterminée à l'étape d) et la résistance de référence R_{ref} est par exemple mise en œuvre par la puce de commande ayant réalisé l'étape b). La détection d'un écart entre les résistances R et R_{ref} indique la présence **d'un** défaut ou dysfonctionnement du système 100, par exemple un échauffement du convertisseur photoélectrique 111 entraînant une baisse de rendement se traduisant par une modification de la valeur de résistance optimale du composant résistif 113.

Dans le cas où l'étape f) a été mise en œuvre par la puce de commande 109 du dispositif 101 et si un écart a été détecté entre les résistances R et R_{ref}, la puce de commande 109 transmet à la source laser 107 une commande d'adaptation de puissance optique, par exemple une commande de réduction de puissance optique. Dans le cas où l'étape f) a été mise en œuvre par la puce de commande 123 du dispositif 103 et si un écart a été détecté entre les résistances R et R_{ref}, la commande d'adaptation de puissance optique est par exemple émise par la puce de commande 123 sous forme d'un signal optique de commande transmis par la source laser 125 et reçu par la puce de commande 109 qui module alors la puissance optique de la source laser 107. Cela permet par exemple de réduire ou de limiter l'échauffement du convertisseur photoélectrique 111, donc d'améliorer son rendement.

Les étapes d), e) et f) susmentionnées sont par exemple mises en œuvre pendant chaque phase d'alimentation du dispositif 103 par le dispositif 101.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la personne du métier est capable, à partir des indications de la présente description, de tirer profit de la détermination des courbes de charge de l'élément capacitif 115 du dispositif 103 et/ou des valeurs de résistance R de l'élément résistif variable 113 permettant d'obtenir un rendement de conversion maximal du convertisseur photoélectrique 111 pour moduler la puissance optique de la source laser 107 afin d'optimiser le fonctionnement du système 100.

Enfin, la mise en œuvre pratique des modes de réalisation et variantes décrits est à la portée de la personne du métier à partir des indications fonctionnelles données ci-dessus. En particulier, la réalisation pratique des différents composants et circuits des dispositifs 101 et 103 du système 100, notamment la réalisation du circuit de commande permettant la mise en œuvre des étapes conduisant à l'optimisation du fonctionnement du système 100 à partir de courbes de charge de l'élément capacitif 115 et/ou de valeurs de résistance R de l'élément résistif variable 113 permettant d'obtenir un rendement de conversion maximal du convertisseur photoélectrique 111, est à la portée de la personne du métier à partir des indications de la présente description.

## Revendications

1. Système (100) comprenant des premier (101) et deuxième (103) dispositifs électroniques reliés par une fibre optique (105), dans lequel :
- le premier dispositif électronique (101) comporte une source laser (107) destinée à illuminer une première extrémité de la fibre optique (105) ;
- le deuxième dispositif électronique (103) comporte un convertisseur photoélectrique (111) destiné à être illuminé depuis une deuxième extrémité de la fibre optique (105) opposée à la première extrémité et un élément capacitif (115) de stockage d'énergie électrique produite par le convertisseur photoélectrique (111) ; et
- les premier (101) et deuxième (103) dispositifs électroniques comportent un circuit de commande connecté à l'élément capacitif (115) et configuré pour mettre en œuvre les étapes successives suivantes :
a) acquérir une première courbe (203) de charge de l'élément capacitif (115) ;
b) comparer la première courbe (203) de charge à une deuxième courbe (201-1, 201-2, 201-3, 201-4) de charge de référence ; et
c) en cas d'écart entre les première (203) et deuxième (201-1, 201-2, 201-3, 201-4) courbes de charge, adapter une puissance optique de la source laser (107).

2. Système (100) selon la revendication 1, dans lequel l'étape b) est mise en œuvre par une première puce de commande (109) du premier dispositif électronique (101).

3. Système (100) selon la revendication 1, dans lequel l'étape b) est mise en œuvre par une deuxième puce de commande (123) du deuxième dispositif électronique (103).

4. Système (100) selon l'une quelconque des revendications 1 à 3, dans lequel le deuxième dispositif électronique (103) comporte en outre un composant résistif variable (113) associé en parallèle du convertisseur photoélectrique (111), le système de commande étant en outre configuré pour mettre en œuvre les étapes successives suivantes :
d) déterminer une première valeur de résistance du composant résistif variable (113) pour laquelle le convertisseur photoélectrique (111) présente un rendement de conversion optimal ;
e) comparer la première valeur de résistance à une deuxième valeur de résistance de référence ; et
f) en cas d'écart entre les première et deuxième valeurs de résistance, adapter la puissance optique de la source laser (107).

5. Système (100) selon la revendication 4, dans sa dépendance à la revendication 2, dans lequel l'étape e) est mise en œuvre par la première puce de commande (109).

6. Système (100) selon la revendication 4, dans sa dépendance à la revendication 3, dans lequel l'étape e) est mise en œuvre par la deuxième puce de commande (123).

7. Système (100) selon l'une quelconque des revendications 4 à 6, dans lequel le rendement de conversion est estimé par une mesure d'un photocourant fourni par le convertisseur photoélectrique (111).

8. Système (100) selon l'une quelconque des revendications 1 à 7, dans lequel l'adaptation de la puissance de la source laser (107) est une diminution de la puissance de la source laser (107).

9. Système (100) selon l'une quelconque des revendications 1 à 8, dans lequel l'élément capacitif (115) est un condensateur comprenant deux armatures conductrices séparées par une région isolante.

10. Système (100) selon l'une quelconque des revendications 1 à 9, dans lequel les premier (101) et deuxième (103) dispositifs sont reliés uniquement par la fibre optique (105).

11. Procédé de commande d'un système (100) comprenant des premier (101) et deuxième (103) dispositifs électroniques reliés par une fibre optique (105), dans lequel :
- le premier dispositif électronique (101) comporte une source laser (107) destinée à illuminer une première extrémité de la fibre optique (105) ;
- le deuxième dispositif électronique (103) comporte un convertisseur photoélectrique (111) destiné à être illuminé depuis une deuxième extrémité de la fibre optique (105) opposée à la première extrémité et un élément capacitif (115) de stockage d'énergie électrique produite par le convertisseur photoélectrique (111) ; et
- les premier (101) et deuxième (103) dispositifs électroniques comportent un circuit de commande connecté à l'élément capacitif (115),
le procédé comprenant les étapes successives suivantes, mises en œuvre par le circuit de commande :
a) acquérir une première courbe (203) de charge de l'élément capacitif (115) ;
b) comparer la première courbe (203) de charge à une deuxième courbe (201-1, 201-2, 201-3, 201-4) de charge de référence ; et
c) en cas d'écart entre les première (203) et deuxième (201-1, 201-2, 201-3, 201-4) courbes de charge, adapter une puissance optique de la source laser (107).

12. Procédé selon la revendication 11, comprenant en outre les étapes successives suivantes, mises en œuvre par le circuit de commande :
d) déterminer une première valeur de résistance d'un composant résistif variable (113) du deuxième dispositif électronique (103), associé en parallèle du convertisseur photoélectrique (111), pour laquelle le convertisseur photoélectrique (111) présente un rendement de conversion optimal ;
e) comparer la première valeur de résistance à une deuxième valeur de résistance de référence ; et
f) en cas d'écart entre les première et deuxième valeurs de résistance, adapter la puissance optique de la source laser (107).
